# EUROPÄISCHE PATENTSCHRIFT

(11) **EP 3 018 001 B1**
(45) Veröffentlichungstag und Bekanntmachung des Hinweises auf die Patenterteilung: **19.06.2019**
(21) Anmeldenummer: 15188307.1
(22) Anmeldetag: 05.10.2015
(51) Int. Cl.: B60P 1/00, B60P 1/36

(54) **LADERAUMAUFBAU MIT EINEM SCHIEBEWANDSYSTEM UND FAHRZEUG**
LOAD SPACE STRUCTURE WITH A SLIDABLE BARRIER SYSTEM AND VEHICLE
STRUCTURE DE COFFRE AVEC UNE SYSTÈME DE PAROI COULISSANTE ET VEHICULE AUTOMOBILE

(30) Priorität: 05.11.2014 DE 202014105316 U
(43) Veröffentlichungstag der Anmeldung: 11.05.2016
(73) Patentinhaber: Fliegl Agrartechnik GmbH, 84453 Mühldorf am Inn (DE)
(72) Erfinder: FLIEGL, Josef jun., 84453 Mühldorf (DE)
(74) Vertreter: Tetzner, Michael

(56) Entgegenhaltungen:
- DE-A1- 1 530 708
- DE-U1-202014 102 305
- GB-A- 530 873
- US-A- 2 530 350
- US-A- 2 781 925
- US-A- 3 021 968

## Beschreibung

Die Erfindung betrifft einen Laderaumaufbau mit einem Schiebewandsystem sowie ein Fahrzeug mit einem solchen Laderaumaufbau.

Insbesondere aus dem land- und forstwirtschaftlichen Bereich sind Fahrzeuge mit Laderaumaufbauten, die ein Schiebewandsystem umfassen, bekannt. Das Verschieben einer Wand des Schiebewandsystems dient dazu, den auf einer Seite von der Wand begrenzten Laderaum temporär zu verkleinern, um entweder in dem Laderaum gelagerte Ladung über eine in der Regel der verschiebbaren Wand gegenüberliegende Entladeöffnung zu entladen oder um bei vollumfänglich geschlossenem Laderaum die Ladung zu verdichten.

Ein Fahrzeug in Form eines Anhängers mit einem solchen Laderaumaufbau ist beispielsweise aus der DE 20 2004 009 744 U1 bekannt. Dort wird der nach oben offene Laderaum von einem Laderaumboden, einer beweglichen Stirnwand, einer durch Hochklappen zu öffnenden Rückwand sowie von zwei Seitenwänden begrenzt. Der Laderaumboden wird teilweise von einem unbeweglich in den Laderaumaufbau integrierten Hauptboden sowie von einem Schiebeboden, dessen Länge (in Richtung der Verschiebbarkeit der Stirnwand) in etwa der Hälfte des größten Abstands zwischen der verschiebbaren Stirnwand und der Rückwand beträgt und der mittels eines Antriebs in Form eines Hydraulikzylinders verschiebbar ist, ausgebildet. Ein Verschieben der Stirnwand relativ zu der Rückwand beziehungsweise relativ zu der von der Rückwand freigebbaren Entladeöffnung erfolgt durch ein Verschieben des Schiebebodens einschließlich der Stirnwand auf dem Hauptboden und/oder einem Verschieben der Stirnwand auf dem Schiebeboden, wobei für ein weitestmögliches Verschieben der Stirnwand in Richtung der Entladeöffnung sowohl der Schiebeboden auf dem Hauptboden als auch die Stirnwand auf dem Schiebeboden verschoben werden muss.

Für das Verschieben der Stirnwand auf dem Schiebeboden ist ein auf der dem Laderaum abgewandten Seite mit der Stirnwand verbundener und folglich mit dieser mitbewegter Antrieb vorgesehen. Dieser wirkt mit einem Zugmittel in Form einer Kette zusammen, die in einem von dem Schiebeboden ausgebildeten Kanal auf der dem Laderaum abgewandeten Seite des Schiebebodens entlang der Bewegungsrichtungen der Stirnwand verläuft. Der die Kette aufnehmende Kanal ist mit einer entlang seiner Längsrichtung verlaufenden Öffnung versehen, durch die der jeweilige Abschnitt der Kette, der in Abhängigkeit von der Relativposition der Stirnwand auf dem Schiebeboden über mehrere Umlenkzahnräder des Antriebs geführt ist, aus dem Kanal herausgeführt ist.

Ein Gurtband dient dazu, die Öffnung des Kanals abzudecken, um ein Eindringen von in dem Laderaum gelagerter Ladung zu vermeiden. Dazu liegt das Gurtband in denjenigen Abschnitten des Kanals, in denen die Kette innerhalb des Kanals geführt ist, auf diesem auf und verschließt die Öffnung entsprechend. Im Bereich des Antriebs dagegen, in dem die Kette aus dem Kanal herausgeführt ist, wird das Gurtband über eine Rollenanordnung von dem Kanal abgehoben und über die Umlenkzahnräder des Antriebs geführt. Um ein sicheres Aufliegen des in sich instabilen Gurtbands auf dem Kanal sicherzustellen, ist eine Spannvorrichtung für das Gurtband vorgesehen.

Auch aus der DE 20 2014 102 305 U1 ist ein Anhänger mit einem Laderaumaufbau mit Schiebewandsystem bekannt. Bei diesem Laderaumaufbau ist der Rotationsantrieb, durch den die Bewegung der Schiebewand bewirkt werden kann, stationär in den Laderaumaufbau integriert, wobei eine Antriebsbewegung des Rotationsantriebs über ein Zugmittel auf die Schiebewand übertragen wird. Dabei ist der Rotationsantrieb an einem Ende des Laderaumaufbaus und eine Umlenkrolle an dem anderen Ende des Laderaumaufbaus angeordnet. Das Zugmittel, dessen beiden Enden an der Schiebewand befestigt sind, ist über sowohl die Umlenkrolle als auch das zusätzlich als Umlenkung wirkende Antriebsrad des Rotationsantriebs geführt. Mittels eines Betriebs des Rotationsantriebs in zwei Drehrichtungen kann somit durch einen einzelnen Zugmitteltrieb eine Bewegung der Schiebewand in beide Bewegungsrichtungen realisiert werden. Das Zugmittel ist in demjenigen Abschnitt, der im Rahmen der möglichen Bewegung der Schiebewand über das Antriebsrad des Rotationsantriebs geführt ist, als Kette ausgebildet, so dass die Antriebsleistung des Rotationsantriebs schlupffrei auf das Zugmittel übertragen werden kann. In einem anderen Abschnitt ist das Zugmittel dagegen als Seil ausgebildet.

Weiterhin sind aus der US 3,021,968 A, der US 2,781,925 A und der US 2,530,350 A Laderaumaufbauten bekannt, bei denen jeweils ein hydraulischer oder pneumatischer Antriebszylinder für ein Verschieben einer Schiebewand genutzt wird, wobei eine Bewegung einer Kolbenstange des Antriebszylinders über zwei Zugmittel auf die Schiebewand übertragen wird. Dabei wird bei einer Bewegung der Kolbenstange beziehungsweise der Schiebewand in einer Bewegungsrichtung die Antriebsleistung mittels eines ersten der Zugmittel und in der anderen Bewegungsrichtung mittels des zweiten Zugmittels übertragen.

Ausgehend von diesem Stand der Technik hat der Erfindung die Aufgabe zugrunde gelegen, einen Laderaumaufbau eines Fahrzeugs mit einem Schiebewandsystem anzugeben, der auf vorteilhafte Weise eine Übertragung auch hoher Verschiebeleistungen auf die Schiebewand ermöglicht.

Diese Aufgabe wird mittels eines Laderaumaufbaus gemäß dem Anspruch 1 gelöst. Ein einen solchen Laderaumaufbau umfassendes Fahrzeug ist Gegenstand des Anspruchs 11. Vorteilhafte Ausgestaltungen des erfindungsgemäßen Laderaumaufbaus und/oder Fahrzeugs sind Gegenstände der weiteren Ansprüche und ergeben sich aus der nachfolgenden Beschreibung der Erfindung.

Der Erfindung liegt der Gedanke zugrunde, dass sich hydraulische oder pneumatische Antriebszylinder durch ein niedriges Leistungsgewicht und - im Vergleich zu insbesondere hydraulischen oder pneumatischen Rotationsantrieben mit vergleichbarer Leistung - durch geringe Kosten auszeichnen. Ein solcher Antriebszylinder könnte demnach vorteilhaft zur Erzeugung der eine Verschiebung der Schiebewand bewirkenden Kräfte genutzt werden. Ein Nachteil bei der Verwendung eines Antriebszylinders stellt jedoch dessen vergleichsweise geringer Hub beziehungsweise dessen im Vergleich zu dem erzielbaren Hub große Gesamtlänge dar. Dieser Nachteil wird dadurch kompensiert, dass der Antrieb der Schiebewand nur indirekt mittels des Antriebszylinders erfolgt, indem die Bewegungen des beweglichen Teils des Antriebszylinders über Zugmittel auf die Schiebewand übertragen werden. Dabei ermöglicht eine Umlenkung der Zugmittel in vorteilhafter Weise die Realisierung einer Übersetzung kleiner eins, bei der eine Bewegung des beweglichen Teils des Antriebszylinders um eine definierte Wegstrecke zu einer Bewegung der Schiebewand um eine Wegstrecke, die größer als die definierte Wegstrecke ist, führt. Vorteilhaft (weil ausreichend und einfach realisierbar) kann dabei eine Übersetzung von 1/2 sein, weil dann die Gesamtlänge des Antriebszylinders im vollständig ausgefahrenen Zustand nur geringfügig länger als der maximal vorgesehene Verschiebweg für die Schiebewand ist. Der Antriebszylinder kann demnach in den Laderaumaufbau integriert werden, ohne dass dieser einen an einer Seite von der Schiebewand begrenzten Laderaum erheblich überragt.

Dementsprechend ist ein Laderaumaufbau mit einem Schiebewandsystem, das zumindest eine Führung, eine Schiebewand und einen Antrieb zum Verschieben der Schiebewand entlang der Führung umfasst, vorgesehen, wobei der Antrieb einen (vorzugsweise hydraulischen oder pneumatischen) Antriebszylinder umfasst und wobei eine Bewegung eines beweglichen Teils (insbesondere der Kolbenstange) des Antriebszylinders in eine erste Bewegungsrichtung über ein erstes Zugmittel und eine Bewegung des beweglichen Teils des Antriebszylinders in eine zweite Bewegungsrichtung über ein zweites Zugmittel auf die Schiebewand übertragen wird.

Ein erfindungsgemäßer Laderaumaufbau umfasst neben einem solchen Schiebewandsystem zumindest noch einen Boden, wobei die Schiebewand entlang des Bodens in Richtung einer Entladeöffnung verschiebbar ist, was ein vorteilhaftes Entladen des von der Schiebewand und dem Boden und gegebenenfalls den weiteren Wänden begrenzten Laderaums mittels der Schiebewand ermöglicht. Vorzugsweise kann der Laderaumaufbau weiterhin noch mindestens eine Wand (Seitenwand, Dachwand) aufweisen, entlang der die Schiebewand ebenfalls verschiebbar ist.

Ein von dem Laderaumaufbau ausgebildeter Laderaum wird vorzugsweise durch die Schiebewand und die weitere(n) Wand/Wände begrenzt. Besonders bevorzugt ist eine zumindest seitlich vollumfängliche (d.h. nur nach oben offene) Begrenzung durch Wände vorgesehen, wobei weiterhin bevorzugt zumindest eine der Wände, insbesondere diejenige, die der verschiebbaren Wand gegenüber liegt, geöffnet werden kann, um die Entladeöffnung freizugeben. Vorzugsweise handelt es sich bei der verschiebbaren Wand um eine in Fahrtrichtung eines mit dem Laderaumaufbau versehenen Fahrzeugs hinten oder (besonders bevorzugt) vorne gelegene Stirnwand. Es besteht aber auch die Möglichkeit zumindest eine Seitenwand als Schiebewand auszubilden.

Für das Schiebewandsystem eines erfindungsgemäßen Laderaumaufbaus ist vorgesehen, dass ein Ende des ersten Zugmittels an der Schiebewand und das andere Ende an der Führung befestigt ist, wobei das Zugmittel ausschließlich über eine an dem beweglichen Teil des Antriebszylinders angeordnete Umlenkung (insbesondere Umlenkrolle) geführt ist. Durch diese Ausgestaltung und Führung des ersten Zugmittels kann mit einem möglichst kurzen Zugmittel eine Übersetzung der entsprechenden Hubbewegung des beweglichen Teils des Antriebszylinders auf die Schiebwand von 1/2 realisiert werden. Dies ist insbesondere deshalb vorteilhaft, weil bei einer Bewegung des beweglichen Teils des Antriebszylinder, die mittels des ersten Zugmittels auf die Schiebewand übertragen wird, die Schiebewand erfindungsgemäß in Richtung einer Entladeöffnung des Laderaumaufbaus verschoben wird. Dazu sind in der Regel erheblich höhere Kräfte erforderlich als für eine Bewegung in der entgegengesetzten Bewegungsrichtung. Ein möglichst kurzes Zugmittel begrenzt dabei in entsprechendem Maße die durch die Kräfte hervorgerufene Längung dieses ersten Zugmittels, was sich positiv auf den tatsächlich maximal realisierbaren Verfahrweg für die Schiebewand und/oder auf die Direktheit der Übertragung der Bewegung des beweglichen Teils des Antriebszylinders auf die Schiebewand auswirken kann.

Das zweite Zugmittel kann dagegen vorzugsweise über zwei außerhalb des Verschiebebereichs der Schiebewand angeordnete Umlenkungen (insbesondere Umlenkrollen) geführt sein, wobei das zweite Zugmittel zudem an der Schiebewand festgelegt und über eine an dem beweglichen Teil des Antriebszylinders angeordnete Umlenkung geführt ist oder an dem beweglichen Teil des Antriebszylinders festgelegt und über eine an der Schiebewand angeordnete Umlenkung geführt ist. Durch diese Ausgestaltung und Führung des zweiten Zugmittels kann wiederum eine Übersetzung der entsprechenden Hubbewegung des beweglichen Teils des Antriebszylinders auf die Schiebwand von 1/2 realisiert werden. Gleichzeitig wird dadurch realisiert, dass die Wirkungsrichtung (d.h. die Übertragung der dazugehörigen Bewegung des beweglichen Teils des Antriebszylinder in die entsprechende Bewegung der Schiebewand) des zweiten Zugmittels derjenigen des ersten Zugmittels entgegengesetzt ist, wobei zudem das jeweils nicht aktive Zugmittel trotz gerade nicht erfolgender Übertragung von Zugkräften nachgeführt bzw. unter Spannung gehalten wird.

Vorgesehen ist, dass bei einer Übertragung einer Bewegung des beweglichen Teils des Antriebszylinders auf die Schiebewand mittels des zweiten Zugmittels die Schiebewand von der Entladeöffnung weg bewegt wird. Da hierbei in der Regel nur geringe Kräfte für das Bewegen der Schiebewand erforderlich sind, stellt die relativ große Länge des zweiten Zugmittels, die sich aus der vorzugsweise vorgesehenen mehrfachen Umlenkung ergibt, in der Regel kein Problem hinsichtlich einer zu großen Längung des zweiten Zugmittels dar.

Aus demselben Grund kann auch vorteilhaft vorgesehen sein, dass das zweite Zugmittel kostengünstig als Seil ausgebildet ist. Die Verwendung eines Seils kann zudem den Vorteil eines relativ geringen Gewichts und geringer Betriebsgeräusche begründen. Das erste Zugmittel, über das gegebenenfalls deutlich höhere Zugkräfte übertragen werden, kann dagegen vorteilhafterweise als Kette ausgebildet sein, die im Vergleich zu einem Seil besser hinsichtlich geringer Dehnung bei hohen Zugkräften und guter Umlenkbarkeit auslegbar ist. Grundsätzlich kann jedoch jedes der Zugmittel als Seil oder Kette ausgebildet sein.

Eine hinsichtlich des erforderlichen Bauraums vorteilhafte Ausgestaltung des erfindungsgemäßen Laderaumaufbaus kann vorsehen, dass alle von dem ersten und zweiten Zugmittel ausgebildete Trume in etwa koaxial oder parallel zu einer Längsachse des Antriebszylinders verlaufen. Dies ermöglicht insbesondere, den gesamten Antriebsstrang parallel zu dem Verschiebebereich für die Schiebewand anzuordnen, wodurch vorteilhafterweise die große Längserstreckung des von dem Laderaumaufbau begrenzten Laderaums für die Anordnung des Antriebsstrangs ausgenutzt werden kann.

Als ebenfalls hinsichtlich des erforderlichen Bauraums vorteilhaft kann sich eine Ausgestaltung des erfindungsgemäßen Laderaumaufbaus zeigen, bei der das erste Zugmittel und das zweite Zugmittel in parallel (beabstandet) angeordneten Ebenen verlaufen. Insbesondere können dadurch auch kollidierende Bauraumanforderungen für die mindestens zwei Zugmittel vermieden werden.

Besonders bevorzugt kann dabei vorgesehen sein, dass (mindestens) zwei erste Zugmittel und ein zweites Zugmittel vorgesehen sind, wobei das zweite Zugmittel bezüglich der Richtung quer zu den Bewegungsrichtungen der Schiebewand zwischen diesen zwei ersten Zugmitteln angeordnet ist. Durch die Nutzung von mehr als einem ersten Zugmittel kann deren Längung gering gehalten werden. Eine symmetrische Anordnung des zweiten Zugmittels zwischen zwei ersten Zugmitteln fördert zudem eine möglichst symmetrische Kraftübertragung von dem Antriebszylinder auf die Schiebewand über die jeweiligen Zugmittel ohne dass es zu Bauraumkonflikten bei der Unterbringung der Zugmittel kommt.

Um Leerlaufwege für den beweglichen Teil des Antriebszylinders zu vermeiden kann vorzugsweise (jeweils) eine Spannvorrichtung für das erste Zugmittel und/oder das zweite Zugmittel vorgesehen sein. Durch diese können die Zugmittel vorgespannt werden, so dass eine Bewegung des beweglichen Teils des Antriebszylinders möglichst direkt auf die Schiebewand übertragen wird. Eine solche Spannvorrichtung kann beispielsweise als einfaches Federelement, insbesondere Schraubenfeder oder Gewindeanker, ausgebildet sein.

In einer weiterhin bevorzugten Ausgestaltung des erfindungsgemäßen Laderaumaufbaus kann zudem vorgesehen sein, dass die Führung als Führungskanal ausgebildet ist und der Antriebszylinder, das erste Zugmittel und/oder das zweite Zugmittel zumindest teilweise innerhalb des Führungskanals angeordnet sind. Dadurch kann der Antriebsstrang wirkungsvoll vor dem Eindringen von Verunreinigungen geschützt werden. Zudem ermöglicht dies in vorteilhafter Weise eine Ausgestaltung des Schiebewandsystems als individuell handhabbare Einheit. Dadurch kann diese zum einen vorteilhaft auf einem Aufbau montiert werden, um einen erfindungsgemäßen Laderaumaufbau auszubilden. Dazu kann eine Unterseite des Führungskanals des Schiebewandsystems beispielsweise auf den Boden des Aufbaus aufgelegt und dort fixiert (z.B. verschraubt) werden. Insbesondere ermöglicht dies auch eine bedarfsweise Ausgestaltung eines Laderaumaufbaus mit Schiebwand oder ohne Schiebewand auf demselben oder einem gleichen Basisaufbau, indem beispielsweise alternativ zu einem erfindungsgemäßen Schiebewandsystems eine stationäre Wand (anstelle der Schiebewand) montierbar ist.

Um den Antriebsstrang möglichst gut gegenüber Verunreinigung zu schützen, kann vorteilhafterweise vorgesehen sein, dass dieser außerhalb des (ggf. u.a.) durch die Schiebewand begrenzten Laderaums angeordnet ist. Bei einer Ausgestaltung des Schiebewandsystems mit innerhalb eines Führungskanals angeordnetem Antriebsstrang sollte der Führungskanal vorteilhafterweise zumindest gegenüber dem Laderaums, besonders bevorzugt möglichst vollständig (insbesondere vollumfänglich) abgeschlossen ausgebildet sein, um ein Eindringen von Verunreinigungen zu vermeiden. Dabei muss jedoch die Übertragung von Kräften von dem Antriebsstrang auf die Schiebewand gewährleistet werden, was vorzugsweise mechanisch mittels eines Befestigungsabschnitts erfolgt. Demnach kann vorgesehen sein, dass die Führung einen Führungsschlitz aufweist, wobei sich der Befestigungsabschnitt für die Schiebewand durch den Führungsschlitz erstreckt, wobei das erste Zugmittel und das zweite Zugmittel auf der der Schiebewand abgewandten Seite einer Führungsfläche an dem Befestigungsabschnitt angreifen.

Um ein Eindringen von Verunreinigungen in den Führungsschlitz und damit gegebenenfalls in den Innenraum der als Führungskanal ausgebildeten Führung zu vermeiden, was zu einer entsprechenden Verunreinigung des Antriebsstrangs führen könnte, kann vorzugsweise vorgesehen sein, dass der Führungsschlitz überall dort, wo der Befestigungsabschnitt der Schiebewand nicht gerade durch den Führungsschlitz geführt ist, möglichst gut abgedichtet ist. Dazu kann vorteilhafterweise vorgesehen sein, dass der Führungsschlitz zwischen der als elastisch deformierbare Abdeckung ausgebildeten Führungsfläche und einem anderen Element der Führung ausgebildet ist, wobei die Abdeckung durch den Befestigungsabschnitt lokal von dem anderen Element abgehoben ist. Eine geeignete Abdeckung für einen erfindungsgemäßen Laderaumaufbau kann kostengünstig aus einem Metallblech, insbesondere einem Stahlblech, ausgebildet sein. Eine solche Abdeckung zeichnet sich auch durch eine relativ gute Verschleißfestigkeit aus. Ebenfalls möglich ist die Ausbildung der Abdeckung aus Kunststoff oder beliebigen anderen elastischen Materialien.

Um zu vermeiden, dass die Abdeckung innerhalb des (auch) von der Schiebewand begrenzten Laderaums lokal abgehoben wird, kann vorzugsweise vorgesehen sei, dass der Befestigungsabschnitt auf der von dem Laderaum beabstandeten Seite der Schiebewand oder unterhalb der Schiebewand angeordnet ist.

Ein erfindungsgemäßes Fahrzeug umfasst zumindest ein Fahrgestell, insbesondere ein radbasiertes Fahrgestell, und einen auf dem Fahrgestell angeordneten, erfindungsgemäßen Laderaumaufbau. Bei dem Fahrzeug kann es sich insbesondere um einen Anhänger handeln. Eine Ausgestaltung in Form eines Kraftfahrzeugs ist ebenfalls möglich.

Die Erfindung wird nachfolgend anhand eines in den Zeichnungen dargestellten Ausführungsbeispiels näher erläutert. In den Zeichnungen zeigt:
- Fig. 1:: in einer perspektivischen Ansicht ein Schiebewandsystem eines erfindungsgemäßen Laderaumaufbaus mit der Schiebewand in einer ersten Stellung;
- Fig. 2:: das Schiebewandsystem gemäß der Fig. 1 (bei nicht dargestellter Abdeckung der Führung) in einer Aufsicht;
- Fig. 3:: einen Längsschnitt durch das Schiebewandsystem entlang der Schnittebene III - III in der Fig. 1;
- Fig. 4:: den in der Fig. 3 mit IV gekennzeichneten Ausschnitt in vergrößerter Darstellung;
- Fig. 5:: das Schiebewandsystem gemäß der Fig. 1 bei nicht dargestellter Führung;
- Fig. 6:: in einer perspektivischen Ansicht das Schiebewandsystem mit der Schiebewand in einer zweiten Stellung;
- Fig. 7:: das Schiebewandsystem gemäß der Fig. 6 in einer Aufsicht;
- Fig. 8:: einen Längsschnitt durch das Schiebewandsystem entlang der Schnittebene VIII - VIII in der Fig. 7;
- Fig. 9:: das Schiebewandsystem gemäß der Fig. 6 bei nicht dargestellter Führung;
- Fig. 10:: den in der Fig. 9 mit X gekennzeichneten Ausschnitt in vergrößerter Darstellung; und
- Fig. 11:: ein erfindungsgemäßes Fahrzeug mit einem ein Schiebewandsystem gemäß den Fig. 1 bis 10 umfassenden Laderaumaufbau.

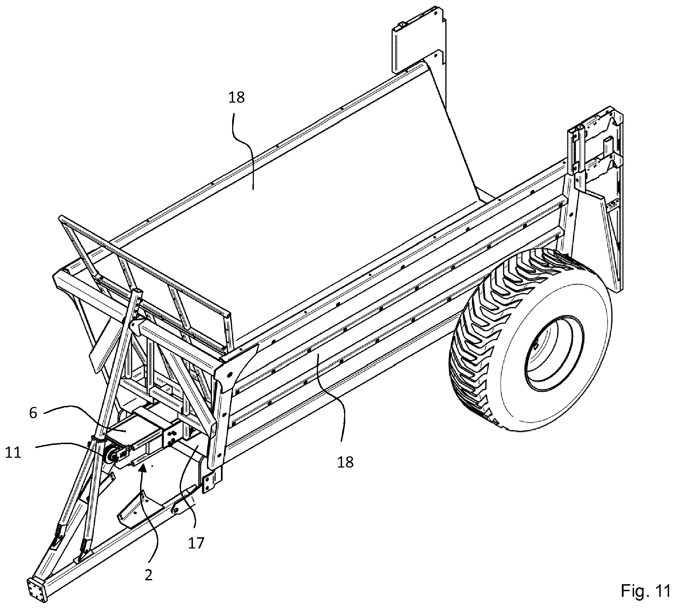

Das in den Zeichnungen dargestellte Schiebewandsystem umfasst eine Schiebewand 1, eine Führung, entlang der die Schiebewand 1 verschiebbar ist, sowie einen Antriebsstrang. Die Schiebwand 1 umfasst eine Tragkonstruktion aus Stäben sowie eine in den Zeichnungen nicht dargestellte Beplankung auf einer einem Laderaum des Fahrzeugs gemäß der Fig. 11 zugewandten Seite der Tragkonstruktion. Der Antriebsstrang ist nahezu vollständig innerhalb der als Führungskanal 2 ausgebildeten Führung angeordnet. Der einen rechteckigen Querschnitt aufweisende Führungskanal 2 ist vollumfänglich geschlossen ausgebildet, d.h. alle vier sich in Längsrichtung erstreckende Seiten des Führungskanals 2 sind durch entsprechende Führungswandelemente verschlossen ausgebildet. Dabei dienen die zwei seitlichen Führungswandelemente 3 als Führungsschienen, in denen jeweils ein Führungsschlitten 4 der Schiebewand 1 verschiebbar geführt ist.

Neben den zwei seitlichen Führungswandelementen 3 sind noch ein unteres Führungswandelement 5 und ein oberes Führungswandelement vorgesehen. Das obere Führungswandelement dient als Abdeckung 6, die lediglich an ihren zwei Enden fest mit den zwei seitlichen Führungswandelementen 3 verbunden ist. Zwischen diesen Enden liegt die beispielsweise aus einem Stahlblech bestehende Abdeckung 6 dagegen lediglich unter Ausbildung von zwei Führungsschlitzen auf den seitlichen Führungswandelementen 3 auf und kann dadurch von diesen lokal unter elastischer Deformation abgehoben werden. Dies ermöglicht, die auf einer Seite der Abdeckung 6 angeordnete Schiebewand 1 über einen Befestigungsabschnitt mit auf der anderen Seite der Abdeckung 6 angeordneten Komponenten des Antriebsstrangs zu verbinden. Dazu umfasst der Befestigungsabschnitt einen die beiden Führungsschlitten 4 fixierenden Querträger 7, der zwischen der Abdeckung 6 und den seitlichen Führungswandelementen 3 und somit innerhalb der Führungsschlitze geführt ist, und ein mit dem Querträger 7 verbundenes, sich innerhalb des Führungskanals 2 befindliches Befestigungsteil 8.

Weiterhin ist auch eine Stirnseite des Führungskanals 2 geschlossen ausgebildet. Hierbei handelt es sich um dasjenige Ende, das am Heck des in der Fig. 11 dargestellten, das Schiebewandsystem integrierenden und als Anhänger ausgebildeten Fahrzeugs angeordnet ist. Lediglich die an der Front des Fahrzeugs angeordnete Stirnseite des Führungskanals 2 ist offen ausgebildet.

Aus diesem offenen Ende ragt ein Abschnitt eines Zylinderrohrs 9 eines hydraulischen oder pneumatischen Antriebszylinders 10 sowie eine Umlenkrolle 11 für ein Zugmittel 12, die an dem freien Ende des Zylinderrohrs 9 mit in Querrichtung des Fahrzeugs ausgerichteter Rotationsachse befestigt ist. Der Antriebszylinder 10 und die Umlenkrolle 11 sind Teile des Antriebsstrangs, der zudem noch weitere Umlenkrollen sowie insgesamt drei Zugmittel umfasst.

Zwei erste Zugmittel 13 sind als Ketten ausgebildet. Diese dienen dazu, eine Ausfahrbewegung einer Kolbenstange 14 des Antriebszylinders 10 auf die Schiebewand 1 zu übertragen, wobei vorgesehen ist, dass eine Bewegung der Kolbenstange 14 auf die Schiebewand 1 mit 1/2 übersetzt wird, die Schiebewand 1 folglich mit doppelter Geschwindigkeit beziehungsweise doppelt so weit wie die Kolbenstange 14 bewegt wird. Dazu ist ein erstes Ende jedes des kettenförmigen ersten Zugmittels 13 im Bereich des offenen Endes des Führungskanals 2 festgelegt, während ein zweites Ende jedes zweiten Zugmittels 13 an dem Befestigungsteil 8 der Schiebewand 1 festgelegt ist. Die parallel zueinander geführten ersten Zugmittel 13 sind zudem über jeweils eine an dem Kopf der Kolbenstange 14 drehbar gelagerte Umlenkrolle 15 geführt, so dass sich für jedes erste Zugmittel 13 zwei parallel geführte Trume 16 ergeben. Durch die Übersetzung der Bewegung der Kolbenstange von 1/2 wird das eher schlechte Verhältnis von Hub zu Gesamtlänge des Antriebszylinders 10 kompensiert, das bei voll ausgefahrenem Antriebszylinder 10 ebenfalls in etwa 1/2 beträgt. Folglich kann der Antriebszylinder 10 hinsichtlich des Bauraums vorteilhaft derart in den Führungskanal 2 integriert sein, dass der Kopf der Kolbenstange 14 im vollständig eingefahrenen Zustand des Antriebszylinders 10 in etwa mittig des vorgesehenen Verschiebebereichs der Schiebewand 1 angeordnet ist. Dadurch ragt der Antriebszylinder 10 lediglich mit einem relativ kurzen Abschnitt aus dem Führungskanal 2 heraus.

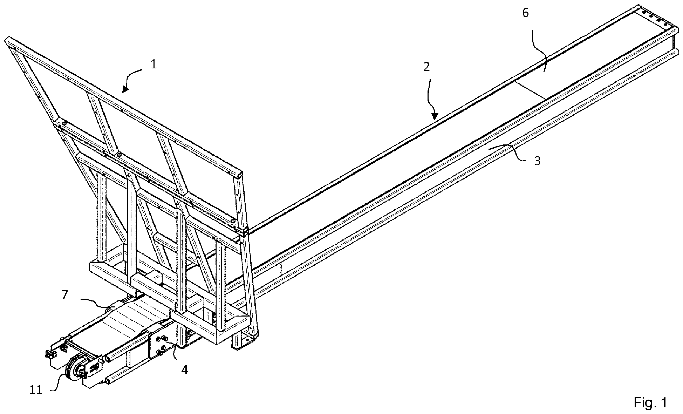

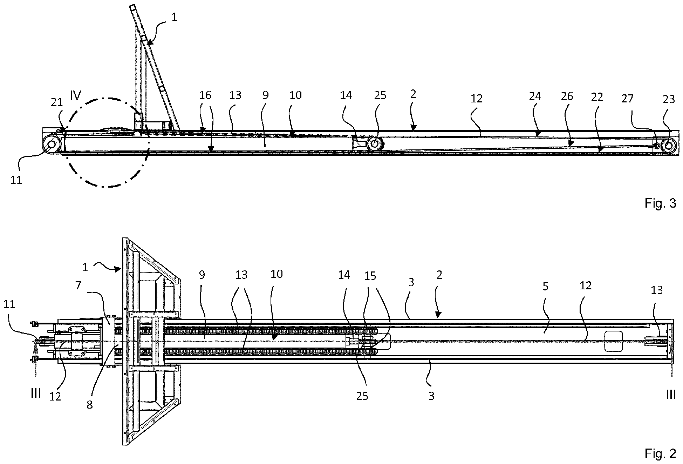

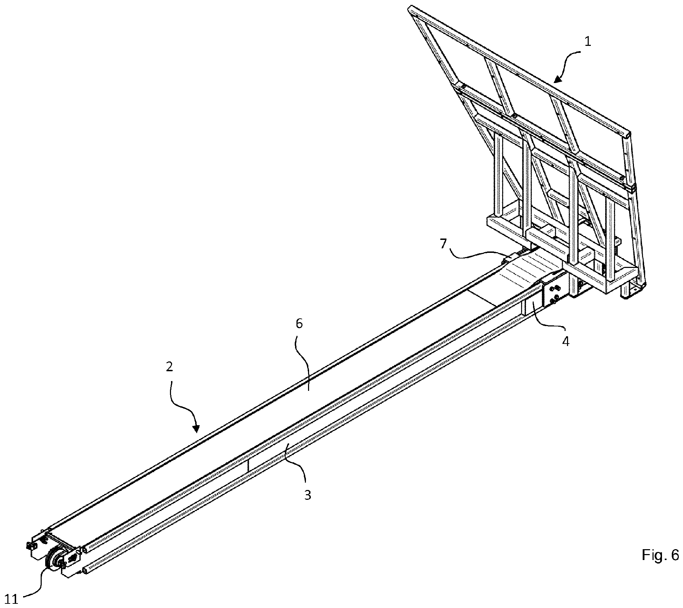

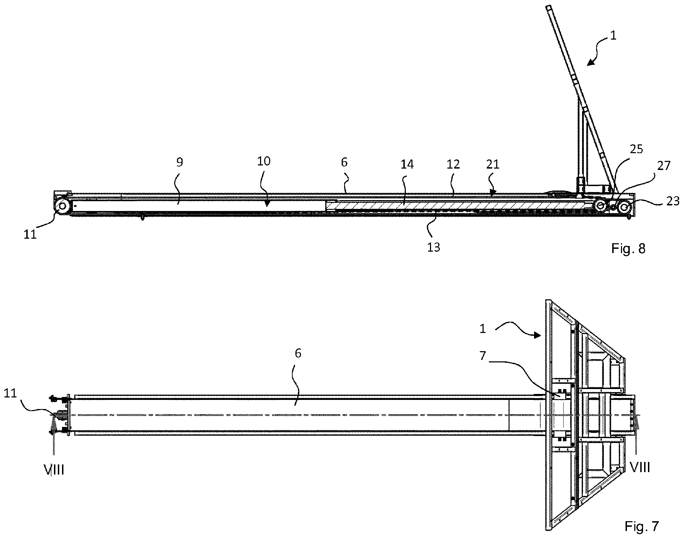

Der Verschiebebereich erstreckt sich von dem vorderen Ende des Laderaumaufbaus an der Front des Fahrzeugs gemäß der Fig. 11 bis zu dem hinteren Ende des Laderaumaufbaus im Heck des Fahrzeugs. Die Schiebewand 1 stellt demnach eine Vorderwand des Laderaumaufbaus dar. Der Laderaumaufbau umfasst weiterhin noch einen Boden 17 sowie zwei Seitenwände 18. Die Schiebewand 1, der Boden 17 und die Seitenwände 18 begrenzen den Laderaum. Die Schiebwand 1 ist entlang des Bodens 17 und der Seitenwände 18 in Richtung einer im Heck des Fahrzeugs ausgebildeten Entladeöffnung verschiebbar. Die Fig. 1 bis 3, 5 und 11 zeigen dabei eine erste Endstellung für die Schiebewand 1, in der der von dieser variabel begrenzte Laderaum am größten ist. In der zweiten Endstellung bei vollständig ausgefahrenem Antriebszylinder (vgl. Fig. 6 bis 9) befindet sich die Schiebwand 1 dagegen im Wesentlichen direkt an der Entladeöffnung, so dass der Laderaum minimal ist. In dem Fahrzeug gemäß der Fig. 11 ist die Entladeöffnung in Folge einer nicht existenten Rückwand des Laderaumaufbaus ausgebildet. Möglich kann aber auch eine zu öffnende, beispielsweise nach oben schwenkbare Rückwand vorgesehen sein. Die Schiebewand 1 kann dazu dienen, in dem Laderaum gelagertes Ladegut in Richtung der Entladeöffnung und aus dieser hinaus zu fördern beziehungsweise zu schieben.

Für das Herausfördern des Ladeguts können erhebliche Kräfte erforderlich sein. Zum Aufbringen dieser hohen Kräfte eignet sich der Antriebszylinder 10 vorteilhaft, weil sich ein solcher - im Vergleich zu insbesondere hydraulischen oder pneumatischen Rotationsantrieben - durch ein hohes Leistungsgewicht und geringe Kosten auszeichnen. Die zum Herausfördern des Ladeguts erforderlichen Kräfte werden über die zwei ersten Zugmittel 13 von der Kolbenstange 14 auf die Schiebewand 1 übertragen. Dabei ist deren Ausbildung als Ketten hinsichtlich der auftretenden Längungen vorteilhaft, da Ketten auf einfache und kostengünstige Weise mit hoher Längssteifigkeit ausgebildet werden können, ohne dass sich dies im erheblichen Maße negativ auf die Umlenkbarkeit über die zwei Umlenkrollen 15 auswirkt.

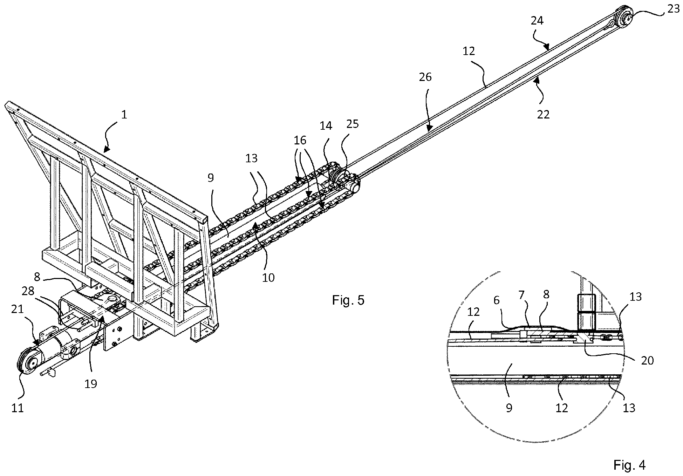

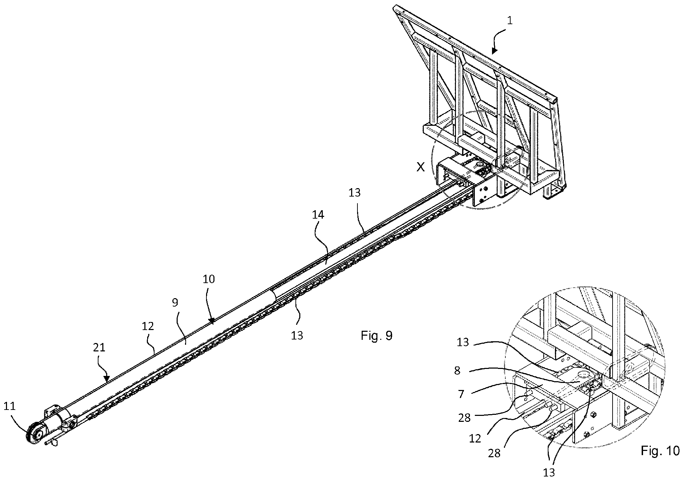

Wie ein Vergleich von beispielsweise den Fig. 5 und 9 ergibt, wird bei einem Ausfahren des Antriebszylinders 10 jeweils derjenige Trum 16 der zwei ersten Zugmittel, der sich zwischen dem an dem Führungskanal 2 festgelegt Ende und der dazugehörigen Umlenkrolle 15 erstreckt, um den Hub der Kolbenstange 14 verlängert, während sich gleichzeitig der jeweils andere Trum 15 um den Hub der Kolbenstange 14 verkürzt. Dadurch ergibt sich die vorgesehene Übersetzung der Bewegung der Kolbenstange 14 auf die Schiebewand 1 von 1/2.

Während beim Ausfahren des Antriebszylinders 10 die Bewegung beziehungsweise Kräfte über die zwei kettenförmigen ersten Zugmittel 13 übertragen werden, erfolgt dies bei einem Einfahren des Antriebszylinders 10, wodurch die Schiebewand 1 von dem Heck des Fahrzeugs beziehungsweise der Entladeöffnung kommend in Richtung der Front des Fahrzeugs verschoben wird, über ein seilförmiges zweites Zugmittel 12. Das zweite Zugmittel 12 ist dazu mit einem ersten Ende in dem auch die ersten Enden der kettenförmigen ersten Zugmittel 13 festlegenden Befestigungsteil 8 festgelegt, beispielsweise durch eine klemmende Fixierung. Ausgehend von dort ist ein erster Trum 19 des zweiten Zugmittels 12 zu einer ersten Umlenkrolle 20 mit in Hochrichtung des Fahrzeugs ausgerichteter Achse geführt. Diese erste Umlenkrolle 20 wird bei einer Bewegung der Schiebewand 1 nicht drehend angetrieben. Von der ersten Umlenkrolle 20 erstreckt sich ein zweiter Trum 21 des zweiten Zugmittels 12 bis zu einer zweiten Umlenkrolle 11, bei der es sich um diejenige Umlenkrolle 11 handelt, die am freien Ende des Zylinderrohrs 9 des Antriebszylinders 10 und somit außerhalb des Führungskanals 2 und damit des Verschiebebereichs der Schiebewand 1 angeordnet ist. Ein dritter Trum 22 des zweiten Zugmittels 12 erstreckt sich von dieser zweiten Umlenkrolle 11 bis zu einer dritten Umlenkrolle 23, die im Bereich des Hecks des Fahrzeugs außerhalb des Verschiebebereichs für die Seitenwand 1 angeordnet ist und ebenfalls eine in Querrichtung des Fahrzeugs ausgerichtete Rotationsachse aufweist. Dieser dritte Trum 22 erstreckt sich demnach zwischen zwei fest in die Führung des Schiebewandsystems integrierten Umlenkrollen 11, 23, so dass sich dessen Länge im Rahmen der Bewegung der Schiebewand nicht verändert. Von der dritten Umlenkrolle 23 erstreckt sich ein vierter Trum 24 des zweiten Zugmittel 12 bis zu einer vierten Umlenkrolle 25, die zwischen den beiden Umlenkrollen 15 für die kettenförmigen ersten Zugmittel 13 am Kopf der Kolbenstange 14 des Antriebszylinders 10 angeordnet ist. Ein fünfter Trum 26 erstreckt sich schließlich von der vierten Umlenkrolle 25 bis zu einem Befestigungselement 27 für das entsprechende Ende des zweiten Zugmittels 12, das kurz vor der dritten Umlenkrolle 23 angeordnet ist.

Bei einem Einfahren des Antriebszylinders 10 wird sowohl der fünfte Trum 26 als auch der vierte Trum 24 um eine dem Hub der Kolbenstange 14 entsprechende Wegstrecke verlängert, wodurch die gewollte Übersetzung der Bewegung der Kolbenstange 14 auf die Schiebewand 1 von 1/2 erreicht wird. Da bei einem Bewegen der Schiebewand 1 von der Entladeöffnung kommend kein Ladegut bewegt werden muss, sind die dafür erforderlichen Kräfte vergleichsweise gering. Aus diesem Grund kann das zweite Zugmittel 12 kostengünstig als Seil ausgebildet werden. Eine relativ große Dehnbarkeit des seilförmigen zweiten Zugmittels 12, die insbesondere in Verbindung mit der relativ großen Länge dieses Zugmittels 12 infolge der mehrfachen Umlenkung zu einer großen Längung führen könnte, stellt wegen dieser vergleichsweise geringen Kräfte kein Problem dar.

Bei dem Schiebesystem ist folglich vorgesehen, dass bei einem Ausfahren des Antriebszylinders 10 die Bewegung/Kräfte über die kettenförmigen ersten Zugmittel 13 auf die Schiebewand 1 übertragen werden, während das seilförmige zweite Zugmittel 12 leer, d.h. ohne durch Antriebskräfte belastet zu sein, mitgeführt wird. Bei einem Einfahren des Antriebszylinders 10 ist es anders herum.

Um eine möglichst direkte Übertragung der Bewegung der Kolbenstange 14 auf die Schiebewand 1 realisieren zu können, sollten die Zugmittel 12, 13 mit zumindest geringer Spannung vorgespannt sein. Hierzu ist für jedes der kettenförmigen ersten Zugmittel 13 eine Spannvorrichtung vorgesehen. Diese umfasst eine Gewindestange 28, die an ein Ende des jeweiligen ersten Zugmittels 13 angebunden und in eine Gewindeöffnung des Befestigungsteils 8 eingeschraubt ist, was eine Lageänderung des entsprechenden Endes und damit ein Spannen des dazugehörigen ersten Zugmittels 13 ermöglicht. Für das seilförmige zweite Zugmittel 12 ist keine solche Spannvorrichtung vorgesehen. Ein Spannen des zweiten Zugmittels 12 wird vielmehr durch die klemmende und dadurch stufenlose Fixierung des einen Endes des (bei der Montage unter Zug gehaltenen) zweiten Zugmittels 12 in dem Befestigungsteil 8 der Schiebewand 1 ermöglicht.

### Bezugszeichenliste:

- 1.: Schiebewand
- 2.: Führungskanal
- 3.: seitliche Führungswandelemente
- 4.: Führungsschlitten
- 5.: unteres Führungswandelement
- 6.: Abdeckung
- 7.: Querträger des Befestigungsabschnitt
- 8.: Befestigungsteil des Befestigungsabschnitt
- 9.: Zylinderrohr
- 10.: Antriebszylinder
- 11.: zweite Umlenkrolle für das zweite Zugelement
- 12.: zweites Zugmittel
- 13.: erstes Zugmittel
- 14.: Kolbenstange
- 15.: Umlenkrolle für das erste Zugmittel
- 16.: Trum des ersten Zugmittels
- 17.: Boden des Laderaumaufbaus
- 18.: Seitenwand des Laderaumaufbaus
- 19.: erster Trum des zweiten Zugmittels
- 20.: erste Umlenkrolle für das zweite Zugmittel
- 21.: zweiter Trum des zweiten Zugmittels
- 22.: dritter Trum des zweiten Zugmittels
- 23.: dritte Umlenkrolle für das zweite Zugmittel
- 24.: vierter Trum des zweiten Zugmittels
- 25.: vierte Umlenkrolle für das zweite Zugmittel
- 26.: fünfter Trum des zweiten Zugmittels
- 27.: Befestigungselement für das zweite Zugmittel
- 28.: Gewindestange

## Patentansprüche

1. Laderaumaufbau mit einem Boden (17) und einem Schiebewandsystem mit einer Führung, einer Schiebewand (1) und einem Antrieb zum Verschieben der Schiebewand (1) entlang der Führung und entlang des Bodens (17), wobei der Antrieb einen Antriebszylinder (10) umfasst und wobei eine Bewegung eines beweglichen Teils des Antriebszylinders (10) in eine erste Bewegungsrichtung über ein erstes Zugmittel (13) und eine Bewegung des beweglichen Teils des Antriebszylinders (10) in eine zweite Bewegungsrichtung über ein zweites Zugmittel (12) auf die Schiebewand (1) übertragen wird, wobei bei einer Übertragung einer Bewegung des beweglichen Teils des Antriebszylinders (10) über das erste Zugmittel (13) die Schiebewand (1) in Richtung einer Entladeöffnung verschoben wird, **dadurch gekennzeichnet, dass** ein Ende des ersten Zugmittels (13) an der Schiebewand (1) und das andere Ende an der Führung befestigt ist, wobei das erste Zugmittel (13) ausschließlich über eine an dem beweglichen Teil des Antriebszylinders (10) angeordnete Umlenkung geführt ist.

2. Laderaumaufbau gemäß Anspruch 1, **dadurch gekennzeichnet, dass** das zweite Zugmittel (12) über zwei außerhalb des Verschiebebereichs der Schiebewand (1) angeordnete Umlenkungen geführt ist, wobei das zweite Zugmittel (12) zudem an der Schiebewand (1) festgelegt und über eine an dem beweglichen Teil des Antriebszylinders (10) angeordnete Umlenkung geführt ist oder an dem beweglichen Teil des Antriebszylinders (10) festgelegt und über eine an der Schiebewand (1) angeordnete Umlenkung geführt ist.

3. Laderaumaufbau gemäß einem der vorhergehenden Ansprüche, **dadurch gekennzeichnet, dass** das erste Zugmittel (13) als Kette und das zweite Zugmittel (12) als Seil ausgebildet ist.

4. Laderaumaufbau gemäß einem der vorhergehenden Ansprüche, **dadurch gekennzeichnet, dass** das erste Zugmittel (13) und das zweite Zugmittel (12) in parallel angeordneten Ebenen verlaufen.

5. Laderaumaufbau gemäß einem der vorhergehenden Ansprüche, **gekennzeichnet durch** zwei erste Zugmittel (13) und ein zweites Zugmittel (12), wobei das zweite Zugmittel (12) bezüglich der Richtung quer zu den Bewegungsrichtungen der Schiebewand (1) zwischen den zwei ersten Zugmitteln (13) angeordnet ist.

6. Laderaumaufbau gemäß einem der vorhergehenden Ansprüche, **gekennzeichnet durch** eine Spannvorrichtung für das erste Zugmittel (13) und/oder das zweite Zugmittel (12).

7. Laderaumaufbau gemäß einem der vorhergehenden Ansprüche, **dadurch gekennzeichnet, dass** die Führung als Führungskanal (2) ausgebildet ist und der Antriebszylinder (10), das erste Zugmittel (13) und/oder das zweite Zugmittel (12) zumindest teilweise innerhalb des Führungskanals (2) angeordnet sind.

8. Laderaumaufbau gemäß einem der vorhergehenden Ansprüche, **dadurch gekennzeichnet, dass** die Führung einen Führungsschlitz aufweist, wobei sich ein Befestigungsabschnitt für die Schiebewand (1) durch den Führungsschlitz erstreckt, wobei das erste Zugmittel (13) und das zweite Zugmittel (12) auf der der Schiebewand (1) abgewandten Seite einer Führungsfläche an dem Befestigungsabschnitt angreifen.

9. Laderaumaufbau gemäß Anspruch 8, **dadurch gekennzeichnet, dass** der Führungsschlitz zwischen der als elastisch deformierbare Abdeckung (6) ausgebildeten Führungsfläche und einem anderen Element der Führung ausgebildet ist, wobei die Abdeckung (6) durch den Befestigungsabschnitt lokal von dem anderen Element abgehoben ist.

10. Laderaumaufbau gemäß einem der vorhergehenden Ansprüche, **dadurch gekennzeichnet, dass** die Schiebewand (1) entlang einer Seitenwand (18) verschiebbar ist.

11. Fahrzeug mit einem Fahrgestell und einem auf dem Fahrgestell angeordneten Laderaumaufbau gemäß einem der Ansprüche 1 bis 10.

## Claims

1. A storage space structure having a floor (17) and a sliding wall system having a guide, a sliding wall (1) and a drive for displacing the sliding wall (1) along the guide and along the floor (17), wherein said drive comprising a drive cylinder (10) and wherein a movement of a movable portion of the drive cylinder (10) in a first movement direction via a first pulling means (13) and a movement of the movable part of the drive cylinder (10) via a second pulling means (12) is transmitted to the sliding wall (1), wherein the sliding wall (1) is displaced in the direction of an unloading opening when a movement of the movable portion of the drive cylinder (10) is transmitted via the first pulling means (13), **characterized in that** a first end of the first pulling means (13) being secured to the sliding wall (1) and the other end being secured to the guide, wherein the first pulling means (13) is guided only via a redirection member which is arranged on the movable portion of the drive cylinder (10.

2. The storage space structure according to claim 1, **characterised in that** the second pulling means (12)is guided via two redirection members which are arranged outside the displacement range of the sliding wall (1), wherein the second pulling means (12) is further secured to the sliding wall (1) and guided via a redirection member which is arranged on the movable portion of the drive cylinder (10) or secured to the movable portion of the drive cylinder (10) and guided via a redirection member arranged on the sliding wall (1) .

3. The storage space structure according to one of the preceding claims, **characterised in that** the first pulling means (13) is constructed as a chain and the second pulling means (12) is constructed as a cable.

4. The storage space structure according to one of the preceding claims, **characterised in that** the first pulling means (13) and the second pulling means (12) extend in planes which are arranged in a parallel manner.

5. The storage space structure according to one of the preceding claims, **characterised by** two first pulling means (13) and a second pulling means (12), wherein the second pulling means (12) is arranged with respect to the direction transverse relative to the movement directions of the sliding wall (1) between the first two pulling means (13).

6. The storage space structure according to one of the preceding claims, **characterised by** a clamping device for the first pulling means (13) and/or the second pulling means (12).

7. The storage space structure according to one of the preceding claims, **characterised in that** the guide is constructed as a guiding channel (2) and **in that** the drive cylinder (10), the first pulling means (13) and/or the second pulling means (12) are arranged at least partially inside the guiding channel (2).

8. The storage space structure according to one of the preceding claims, **characterised in that** the guide has a guiding slot, wherein a securing portion for the sliding wall (1) extends through the guiding slot, wherein a connection of the first pulling means (13) and the second pulling means (12) to the securing portion is located on a side of a guiding face of the guide, said side of the guiding face facing away from the sliding wall (1).

9. The storage space structure according to claim 8, **characterised in that** the guiding slot is formed between the guiding face which is constructed as a resiliently deformable cover (6) and another element of the guide, wherein the cover (6) is locally lifted from the other element by the securing portion.

10. The storage space structure according to one of the preceding claims, **characterised in that** the sliding wall (1) can be displaced along a side wall (18).

11. A vehicle having a chassis and a storage space structure which is arranged on the chassis according to one of the preceding claims.

## Revendications

1. Structure de coffre, comprenant un fond (17) et un système de paroi coulissante avec un guidage, une paroi coulissante (1) et un entraînement pour le déplacement de la paroi coulissante (1) le long du guidage et le long du fond (17), sachant que l'entraînement comprend un cylindre d'entraînement (10) et sachant qu'un mouvement d'une pièce mobile du cylindre d'entraînement (10) dans une première direction de déplacement, par l'intermédiaire d'un premier moyen de traction (13) et un mouvement de la pièce mobile du cylindre d'entraînement (10) dans une deuxième direction de déplacement, par l'intermédiaire d'un deuxième moyen de traction (12), sont transmis à la paroi coulissante (1), sachant que, lors d'une transmission d'un mouvement de la pièce mobile du cylindre d'entraînement (10) à la paroi coulissante (1) par l'intermédiaire du premier moyen de traction (13), la paroi coulissante (1) est déplacée en direction d'une ouverture de déchargement, **caractérisée en ce qu'**une extrémité du premier moyen de traction (13) est fixée à la paroi coulissante (1) et que l'autre extrémité est fixée au guidage, sachant que le premier moyen de traction (13) est exclusivement conduit par une déviation disposée sur la pièce mobile du cylindre d'entraînement (10).

2. Structure de coffre selon la revendication 1, **caractérisée en ce que** le deuxième moyen de traction (12) est conduit par deux déviations disposées en dehors de la zone de déplacement de la paroi coulissante (1), sachant que, de plus, le deuxième moyen de traction (12) est fixé sur la paroi coulissante (1) et est conduit par une déviation disposée sur la partie mobile du cylindre d'entraînement (10) ou qu'il est conduit par une déviation disposée sur la paroi coulissante (1), ou est fixé sur la partie mobile du cylindre d'entraînement (10) et est conduit par une déviation disposé sur la paroi coulissante (1).

3. Structure de coffre selon l'une des revendications précédentes, **caractérisée en ce que** le premier moyen de traction (13) est réalisé en tant que chaîne et le deuxième moyen de traction (12) en tant que câble.

4. Structure de coffre selon l'une des revendications précédentes, **caractérisée en ce que** le premier moyen de traction (13) et le deuxième moyen de traction (12) suivent des plans disposés parallèlement.

5. Structure de coffre selon l'une des revendications précédentes, **caractérisée par** deux premiers moyens de traction (13) et un deuxième moyen de traction (12), sachant que le deuxième moyen de traction (12), en référence à la direction, est disposé, entre les deux premiers moyens de traction (13), transversalement par rapport aux directions de déplacement de la paroi coulissante (1).

6. Structure de coffre selon l'une des revendications précédentes, **caractérisée par** un dispositif de serrage pour le premier moyen de traction (13) et / ou pour le deuxième moyen de traction (12).

7. Structure de coffre selon l'une des revendications précédentes, **caractérisée en ce que** le dispositif de guidage est réalisé sous la forme d'un canal de guidage (2) et que le cylindre d'entraînement (10), le premier moyen de traction (13) et / ou le deuxième moyen de traction (12) sont disposés au moins partiellement à l'intérieur du canal de guidage (2).

8. Structure de coffre selon l'une des revendications précédentes, **caractérisée en ce que** le guidage est doté d'une fente de guidage, sachant que la section de fixation, prévue pour la paroi coulissante (1), s'étend à travers la fente de guidage, sachant que le premier moyen de traction (13) et le deuxième moyen de traction (12) entrent en prise avec une surface de guidage sur la section de fixation, sur le côté opposé à la paroi coulissante (1).

9. Structure de coffre selon la revendication 8, **caractérisée en ce que** la fente de guidage est formée entre la surface de guidage, réalisée en tant que couverture (6) déformable élastiquement, et un autre élément du guidage, sachant que la couverture (6) est relevée, localement, de l'autre élément, par la section de fixation.

10. Structure de coffre selon l'une des revendications précédentes, **caractérisée en ce que** la paroi coulissante (1) peut être déplacée le long d'une paroi latérale (18).

11. Véhicule automobile avec un châssis actif et une structure de coffre selon l'une des revendications 1 à 10, laquelle est disposée sur le châssis actif.
